# EUROPÄISCHE PATENTANMELDUNG

(11) **EP 1 411 726 A2**
(43) Veröffentlichungstag der Anmeldung: **21.04.2004**
(21) Anmeldenummer: 03023317.5
(22) Anmeldetag: 15.10.2003
(51) Int. Cl.: H04N 7/10

(54) **Vorrichtung zur Anpassung eines Signalpegels zwischen einem Signaleingang und einem Signalausgang**

(30) Priorität: 18.10.2002 DE 10248698
(71) Anmelder: Hirschmann Electronics GmbH & Co. KG, 72654 Neckartenzlingen (DE)
(72) Erfinder: Wendel, Wolfgang, 73257 Köngen (DE); Pasadu, Chaiyakarn, 73240 Wendlingen (DE); Epple, Ralf, 73669 Lichtenwald (DE)
(74) Vertreter: Thul, Hermann, Dipl.-Phys.

(57) **Zusammenfassung**

Vorrichtung (1) zur Anpassung eines Pegels zwischen einem Eingang (2) und einem Ausgang (3), wobei erfindungsgemäß vorgesehen ist, daß in Abhängigkeit des Pegels an einem symmetrischen Eingang (2) ein Umschalter (6) betätigbar ist, der den Eingang (2) über einen von zumindest zwei Signalpfaden (7, 8, 9) unter Zwischenschaltung eines Anpassungsgliedes mit einem symmetrischen Ausgang (3) verbindet.

## Beschreibung

Die Erfindung betrifft eine Vorrichtung zur Anpassung eines Pegels zwischen einem Eingang und einem Ausgang gemäß den Merkmalen des Oberbegriffes des Patentanspruches 1.

Solche Vorrichtungen zur Pegelanpassung sind bekannt und zur optimalen Signalübertragung erforderlich. Wenn beim Fernsehempfang beispielsweise das aus einem Kabelnetz oder von einem Satelliten kommende Signal direkt in ein Endgerät wie einen Fernseher oder einen Videorecorder eingespeist würde, kommt es zu Signalverzerrungen und zu keinem optimalen Bild, wenn der für den Empfang erforderliche Pegel des Signals nicht eingehalten wird. Insbesondere schwankt dieser Pegel in Abhängigkeit der verwendeten Kabellänge und auch in Abhängigkeit der Eigenschaften des eingesetzten Kabels.

Um eine Anpassung des Pegels vornehmen zu können, sind Vorrichtungen bekannt, bei denen eine Anpassung über ein kontinuierlich arbeitendes Stellglied ermöglicht wird. Hierbei handelt es sich beispielsweise um ein Potentiometer mit zugehörigen elektronischen Bauteilen, die zwischen den Eingang und den Ausgang geschaltet sind. Nachdem diese Vorrichtung zur Pegelanpassung zwischen Eingang und Ausgang geschaltet wurde, läßt sich der Pegel durch Drehen an dem Potentiometer einstellen, wobei das sich verbessernde Bild am Fernseher beobachtet werden kann. Allerdings ist nicht immer gewährleistet, daß die Vorrichtung zur Pegelanpassung auch in der Nähe des Fernsehgerätes installiert ist, so daß durch Veränderung des Pegels nicht direkt die Veränderung des empfangenen Bildes verfolgt werden kann. Daher sind solche kontinuierlich arbeitenden Vorrichtungen zur Pegelanpassung schwierig zu bedienen. Außerdem ist der Aufbau einer solchen Vorrichtung aufwendig, da über den gesamten Frequenzbereich (Bandbreite) eine Pegelanpassung erforderlich sein soll.

Der Erfindung liegt daher die Aufgabe zugrunde, eine Vorrichtung zur Anpassung eines Pegels zwischen einem Eingang und einem Ausgang bereitzustellen, die einfach in der Bedienung ist und die eingangs geschilderten Nachteile vermeidet.

Diese Aufgabe ist durch die Merkmale des Patentanspruches 1 gelöst.

Es handelt sich vor allem um einen Vorrichtung zur Anpassung eines Pegels zwischen einem symmetrischen Eingang und einem symmetrischen Ausgang.

Erfindungsgemäß ist vorgesehen, daß in Abhängigkeit des Pegels an einem symmetrischen Eingang ein Umschalter betätigbar ist, der den Eingang über einen von zumindest zwei Signalpfaden unter Zwischenschaltung eines Anpassungsgliedes mit einem symmetrischen Ausgang verbindet. Der Umschalter, der so viele Schaltstellungen hat, wie Signalpfade vorgesehen sind, kann einfach bedient werden. Durch die ebenso in vorteilhafter Weise aufgebauten Anpassungsglieder, die mit dem Umschalter zwischen den Eingang und den Ausgang geschaltet werden, kann eine Pegelanpassung derart erfolgen, daß am Ausgang derjenige Pegel anliegt, der für die Weiterverarbeitung am Endgerät erforderlich ist. Durch den Umschalter wird damit der am Eingang anliegende mögliche Pegelbereich in zumindest zwei, aber auch mehrere Teilpegelbereiche aufgeteilt, wobei die Anpassungsglieder auf die einzelnen Teilpegelbereiche abgestimmt sind und es ermöglichen, daß der jeweilige Teilpegelbereich durch das zugehörige Anpassungsglied auf den erforderlichen Pegel, gegebenenfalls in gewissen Grenzen, gebracht wird. Bei den Anpassungsgliedern in den jeweiligen Signalpfaden handelt es sich beispielsweise um Dämpfungsglieder, wenn der Pegel am Eingang höher als am Ausgang erforderlich ist. Umgekehrt kommt in dem Signalpfad als Anpassungsglied ein Verstärker zum Einsatz, wenn der Pegel am Eingang geringer ist als der am Ausgang erforderliche Pegel. Diese Anpassungsglieder wie Dämpfungsglieder und Verstärker können in Kombination mit einem Entzerrglied zum Einsatz kommen, während auch nur ein Entzerrglied (Entzerrer) in einem Signalpfad denkbar ist.

Ein Entzerrer dient zum Dämpfungsausgleich von z.B. Kabeldämpfung. Ein Entzerrer besitzt bei tiefen Frequenzen eine hohe Dämpfung (z.B. bei 47 MHz 20 dB) und bei hohen Frequenzen eine geringe Dämpfung (z.B. bei 800 MHz 1 dB), das Kabel hingegen bei tiefen Frequenzen eine geringe Dämpfung (z.B. bei 47 MHz 1 dB) und bei hohen Frequenzen eine hohe Dämpfung (z.B. bei 800 MHz 20 dB). In Summe ergibt sich dadurch eine Gesamtdämpfung von 21 dB über den gesamten Frequenzbereich. Ein Entzerrer muß auf die entsprechende Kabeldämpfung bzw. der Kabellänge ausgelegt werden.

In Weiterbildung der Erfindung ist der Umschalter entweder manuell oder in Abhängigkeit des am Eingang erfaßten Pegels automatisch betätigbar. Die manuelle Betätigung des Umschalters hat den Vorteil, daß eine Bedienperson, die eine Anlage mit der Vorrichtung zur Pegelanpassung in Betrieb nimmt oder einstellt, einfach durch Betätigen des Umschalters den Pegel anpassen und damit die gewünschte Signalqualität (Bildqualität) einstellen kann. Da die jeweiligen Anpassungsglieder in den Signalpfaden auf die einzelnen Teilpegelbereiche abgestimmt sind, kommt es durch das einfache Umschalten zu dem gewünschten Ergebnis, so daß eine umständliche Einstellung durch Drehen an einem Potentiometer entfällt.

Alternativ dazu kann auch der Pegel am Eingang erfaßt werden, wobei in Abhängigkeit des erfaßten Pegels der Umschalter (zum Beispiel ein elektronischer Umschalter) zwischen den einzelnen Signalpfaden mit den darin angeordneten Anpassungsgliedern umschalten kann. Dies hat den Vorteil, daß eine manuelle Betätigung des Umschalters vollständig entfällt, so daß nach dem Zwischenschalten der Vorrichtung zur Pegelanpassung am Ausgang der gewünschte Pegel zur Verfügung steht, und zwar unabhängig von dem am Eingang anliegenden Pegel, so daß die am Eingang angeschlossene Kabellänge keine Rolle mehr spielt.

In Weiterbildung der Erfindung ist dem Ausgang ein Wandler nachgeschaltet. Dieser Wandler wandelt ein am Ausgang anliegendes symmetrisches Signal in ein asymmetrisches Signal um. Selbstverständlich ist auch die umgekehrte Wandlung denkbar.

Der Wandler ist ein sogenannter Balun-Übertrager, welcher die Wandlung von einer symmetrischen auf eine asymmetrische Leitung ermöglicht. Beispielsweise wird von 100 Ohm symmetrisch auf 75 Ohm asymmetrisch gewandelt.

Wichtig ist dabei, daß der Wandler dem Netzwerk nachgeschaltet ist. Dadurch wird erreicht, daß mit dem aktiven Zweig sehr gute elektrische Eigenschaften erzielt werden. Im besonderen wird dadurch sehr geringes Rauschen erreicht, wenn der Verstärker im Signalpfad geschaltet ist.

In Weiterbildung der Erfindung ist die Vorrichtung zur Anpassung des Pegels in einem metallischen Gehäuse angeordnet. Je nach Frequenzbereich, mit dem die Vorrichtung betrieben wird, ist es erforderlich, die verarbeiteten Signale nicht in die Umgebung abstrahlen zu lassen und umgekehrt zu verhindern, daß externe Signale in die Vorrichtung einstrahlen. Durch die Anordnung der Vorrichtung mit ihren beteiligten Bauelementen in einem metallischen Gehäuse, das gegebenenfalls mit Masse verbunden werden kann, gibt es keine Probleme mit ausgesendeten oder auf die Vorrichtung einwirkenden Störstrahlungen und auch keine Probleme mehr mit EMV. Weiterhin besteht die Möglichkeit, die Vorrichtung zur Pegelanpassung in einer Antennensteckdose zu integrieren.

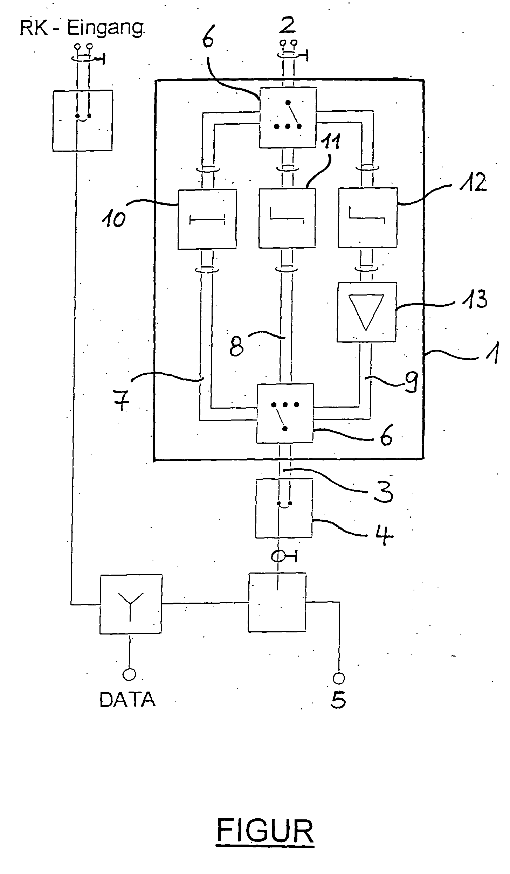

Die Erfindung ist in einem Ausführungsbeispiel, auf das die Erfindung jedoch nicht beschränkt ist, beschreiben, welches anhand der Figur erläutert wird.

Mit der Bezugsziffer 1 ist eine Vorrichtung zur Anpassung eines Pegels zwischen einem symmetrischen Eingang 2 und einem symmetrischen Ausgang 3 bezeichnet. An dem Eingang 2, der insbesondere als HF-Eingang ausgebildet ist, ist eine symmetrische Anschlußdose (Antennensteckdose) vorgeschaltet. Die Verbindung zwischen dieser Dose und dem Eingang 2 erfolgt über ein symmetrisches Koaxialkabel, insbesondere ein Patch-Kabel. An dem Ausgang 3 ist ein Wandler 4 angeschlossen, der das am Ausgang 3 anliegende symmetrische Signal in ein asymmetrisches Signal umwandelt, welches dann an einem Ausgang, insbesondere einem TV-Ausgang 5, bereitsteht. An diesem TV-Ausgang werden Endgeräte wie Fernsehen, Rundfunkgeräte, Modem und Telekommunikationsgeräte (wie beispielsweise Telefon) angeschlossen.

Dem HF-Eingang ist eine symmetrische Anschlußdose der strukturierten Verkabelung vorgeschaltet, welche in diesem Falle auf 2 Adernpaare z.B. CATV-Signale überträgt. Diese Dose ist nicht unbedingt eine Antennensteckdose. Die Verbindung erfolgt dann nicht durch ein Koaxialkabel, sondern durch ein symmetrisches Patchkabel.

Der Einbau kann in einer Unterputzdose, ähnlich einer Antennensteckdose, erfolgen.

In erfindungsgemäßer Weise umfaßt die Vorrichtung 1 zur Pegelanpassung einen Umschalter 6, der als symmetrischer Umschalter ausgebildet ist. Mit diesem Umschalter 6 wird der Eingang 2 über zumindest zwei, insbesondere drei (oder mehr) symmetrische Signalpfade 7, 8 und 9 auf den Ausgang 3 geschaltet. In den einzelnen Signalpfaden sind Anpassungsglieder vorhanden, die je nach Stellung des Umschalters 6 zwischen Eingang 2 und Ausgang 3 geschaltet werden. So wird beispielsweise in der einen Stellung des Umschalters 6 der Eingang 2 über ein Dämpfungsglied 10 in dem Signalpfad 7 mit dem Ausgang 3 verbunden. Diese Schalterstellung kommt dann in Betracht, wenn der Pegel am Eingang 2 höher ist als der gewünschte Pegel am Ausgang 3. Der Umschalter 6 wird bei dem Ausführungsbeispiel in eine Mittenstellung gebracht, wenn ein Entzerrglied 11 über den Signalpfad 8 zwischen Eingang 2 und Ausgang 3 geschaltet werden soll. Ist der Pegel am Eingang 2 geringer als der am Ausgang 3 benötigte Pegel, erfolgt eine Umschaltung des Umschalters 6 derart, daß in dem Signalpfad 9 ein weiteres Entzerrglied 12 und ein Verstärker 13 zwischen Eingang 2 und Ausgang 3 geschaltet werden. Dadurch wird in besonders vorteilhafter Weise dann, wenn die Vorrichtung 1 zur Pegelanpassung in einer Antennensteckdose integriert ist, das Signal an einer Stelle verstärkt, an der vorher möglichst wenig Signalverfälschungen erfolgt sind, so daß ein Signal mit möglichst geringem Rauschen über den Ausgang 3 bzw. den TV-Ausgang 5 an das Endgerät abgegeben werden kann.

Die Schalter und die Entzerrer, wie auch die aktiven Elemente sind alle symmetrisch ausgeführt 1. Nach dem zweiten Schalter 6 wird mit einem SMD-Übertrager 4 die Wandlung von symmetrisch zu asymmetrisch realisiert. Dieser Aufbau ermöglicht die beschriebenen Vorteile gegenüber dem jetzigen Stand der Technik.

Die Hochfrequenzsignalübertragung wird über zwei Adernpaare übertragen. Ein Adernpaar wird für die Vorwärtsübertragung benutzt. Das zweite Adernpaar wird für die Rückkanalsignale verwendet. Über den Hochpaß des Diplexers wird der Vorwärtsbereich am DATA-Ausgang ausgekoppelt und über den Tiefpaß des Diplexers wird der Rückkanal auf den RK-Ausgang geschaltet.

Zusammenfassend wird noch einmal darauf hingewiesen, daß der symmetrische Aufbau der erfindungsgemäßen Vorrichtung zur Anpassung des Pegels zwischen dem symmetrischen Eingang und dem symmetrischen Ausgang besonders wesentlich ist. Denn bei herkömmlichen Koaxialkabeln und damit verbundenen Einrichtungen zur Anpassung des Pegels, die asymmetrisch aufgebaut sind, ist der Nachteil gegeben, daß sich zwischen dem Signalpfad (insbesondere im Innenleiter des Koaxialkabels) und der Masse (insbesondere der Abschirmung des Koaxialkabels) eine unerwünschte Störspannung bildet. Im Gegensatz hierzu bietet der symmetrische Aufbau die Möglichkeit, daß keine Störspannungen entstehen bzw. entstandene Störspannungen sich gegenseitig auslöschen, insbesondere dann, wenn sich bei einem zweiadrigen Kagel mit Abschirmung Störspannungen zwischen dem jeweiligen Leiter (Ader) gegenüber der Masse (Abschirmung) bilden, diese Spannungen jedoch dem Betrag und der Phase nach entgegengerichtet sind, so daß sie sich gegenseitig auslöschen. Um diesen Effekt zu erzielen, wird bei der vorliegenden Erfindung auch davon ausgegangen, daß die in der Vorrichtung 1 zur Pegelanpassung vorhandenen Elemente (wie Umschalter 6, Dämpfungsglied 10, Entzerrglied 11, 12, Verstärker 13 sowie die Signalpfade 7 und 8) sowie die der Vorrichtung 1 vor- bzw. nachgeschalteten Elemente (wie insbesondere der symmetrische Eingang 2 und der symmetrische Ausgang 3 symmetrisch aufgebaut sind, das heißt, daß der Eingang 2, der Ausgang 3 sowie die Signalpfade 7, 8 und 9 über jeweils zwei Signalleitungen verfügen. Ebenso wichtig ist dabei auch der symmetrische schaltungstechnische Aufbau der Vorrichtung 1, insbesondere der darin integrierten Elemente 10 bis 13.

### Bezugszeichenliste:

- 1: Vorrichtung zur Pegelanpassung
- 2: symmetrischer Eingang
- 3: symmetrischer Ausgang
- 4: Wandler
- 5: TV-Ausgang
- 6: Umschalter
- 7: Signalpfad
- 8: Signalpfad
- 9: Signalpfad
- 10: Dämpfungsglied
- 11: Entzerrglied
- 12: Entzerrglied
- 13: Verstärker

## Patentansprüche

1. Vorrichtung (1) zur Anpassung eines Pegels zwischen einem Eingang (2) und einem Ausgang (3), **dadurch gekennzeichnet, daß** in Abhängigkeit des Pegels an einem symmetrischen Eingang (2) ein Umschalter (6) betätigbar ist, der den Eingang (2) über einen von zumindest zwei Signalpfaden (7, 8, 9) unter Zwischenschaltung eines Anpassungsgliedes mit einem symmetrischen Ausgang (3) verbindet.

2. Vorrichtung (1) nach Anspruch 1, **dadurch gekennzeichnet, daß** das Anpassungsglied ein Dämfungsglied (10) ist.

3. Vorrichtung (1) nach Anspruch 1, **dadurch gekennzeichnet, daß** das Anpassungsglied ein Entzerrglied (11, 12) ist.

4. Vorrichtung (1) nach Anspruch 1, **dadurch gekennzeichnet, daß** das Anpassungsglied ein Verstärker (13) ist.

5. Vorrichtung (1) nach einem der Ansprüche 1 bis 4, **dadurch gekennzeichnet, daß** der Umschalter (6) manuell betätigbar ist.

6. Vorrichtung (1) nach einem der Ansprüche 1 bis 4, **dadurch gekennzeichnet, daß** der Umschalter (6) in Abhängigkeit des am Eingang (2) erfaßten Pegels automatisch betätigbar ist.

7. Vorrichtung (1) nach einem der vorhergehenden Ansprüche, **dadurch gekennzeichnet, daß** dem Ausgang (3) ein Wandler (4) nachgeschaltet ist.

8. Vorrichtung (1) nach einem der vorhergehenden Ansprüche, **gekennzeichnet durch** die Anordnung in einem metallischen Gehäuse.

9. Vorrichtung (1) nach einem der vorhergehenden Ansprüche, **dadurch gekennzeichnet, daß** die Vorrichtung (1) in einer Antennensteckdose integriert ist.
